# EUROPÄISCHE PATENTSCHRIFT

(11) **EP 0 797 285 B1**
(45) Veröffentlichungstag und Bekanntmachung des Hinweises auf die Patenterteilung: **19.07.2000**
(21) Anmeldenummer: 97101943.5
(22) Anmeldetag: 07.02.1997
(51) Int. Cl.: H02K 1/27

(54) **Rotor für eine elektrische Maschine, insbesondere Transversalflussmaschine**
Rotor for an electric machine, in particular for a transversal flux machine
Rotor pour machine électrique, en particulier pour machine à flux transversal

(30) Priorität: 19.03.1996 DE 19610754
(43) Veröffentlichungstag der Anmeldung: 24.09.1997
(73) Patentinhaber: Voith Turbo GmbH & Co. KG, 89522 Heidenheim (DE)
(72) Erfinder: Mühlberger, Uwe, 89522 Heidenheim (DE); Lange, Andreas, 89522 Heidenheim (DE); Müller, Robert, Dr., 89407 Dillingen (DE); Angerer, Wolfram, 89518 Heidenheim (DE)
(74) Vertreter: Dr. Weitzel & Partner

(56) Entgegenhaltungen:
- DE-A- 4 400 614
- DE-C- 4 330 272
- FR-A- 2 594 272
- GB-A- 2 075 274

## Beschreibung

Die Erfindung betrifft einen Rotor für eine elektrische Maschine, insbesondere eine Transversalflußmaschine, im einzelnen mit den Merkmalen des Oberbegriffes aus Anspruch 1.

Elektrische Maschinen, die nach dem Transversalflußprinzip arbeiten, sind bereits aus den folgenden Patent- und Offenlegungsschriften bekannt:
1. DE 35 36 538 A1
2. DE 37 05 089 C1
3. DE 39 04 516 C1.

In diesen Druckschriften sind das Grundprinzip und der grundsätzliche Aufbau von nach dem Transversalflußprinzip arbeitenden Maschinen im einzelnen beschrieben. Derartige elektrische Maschinen können sowohl nach dem Motor- als auch nach dem Generatorprinzip betrieben werden.

In den beschriebenen Ausführungen umfaßt der Rotor eine oder mehrere axial aneinandergereihte, durch dazwischenliegende Kunststoff- oder aus anderem, elektrisch nicht leitfähigen Material ausgeführte Ringe und/oder eine Rotorscheibe voneinander getrennte, konzentrische Ringe (Aktivringe), in denen am Umfang abwechselnd sogenannte Sammler- bzw. Weicheisenelemente, welche üblicherweise aus axial aufgeschichtetem Elektroblech aufgebaut sein können, und Magnete angeordnet sind. Diese konzentrischen Ringe werden auch als Polstruktur bezeichnet.

Die Festigkeit der Rotorstruktur wird bekanntermaßen durch Kleben erreicht, wobei diese Verbindung mit einfachen konstruktiven Elementen, wie beispielsweise Bolzen, Schrauben, Nieten usw. eine zusätzliche Absicherung erfährt. Derartige Ausführungen sind beispielsweise aus den nachfolgend genannten Druckschriften bekannt:
4. DE 91 16 192 U1
5. DE 92 00 116 U1
6. EP 0 642 204 A1
7. DE 44 00 614 C2.

Bei dem in der Druckschrift E 91 16 192 U1 offenbarten Rotor sind die Magnete und die Sammler- bzw. Weicheisenelemente in einer Tragkonstruktion aus elektrisch und magnetisch nicht leitfähigem Material zusammengefügt. Die Weicheisenelemente sind mit den Permanentmagneten fest vergossen oder verklebt. Die Verbindung der einzelnen Ringe (Trägerscheibe und Polstruktur) untereinander erfolgt mittels Klebverbindung. Zur Realisierung der Festigkeit sind die Polstrukturen in einer Ausführung entsprechend dieser Druckschrift zu beiden Seiten der zentralen Trägerscheibe mit vorgefertigten Aufnahmeringen versehen, die radial erstreckende, taschenförmige Öffnungen aufweisen, in die die Permanentmagnete jeweils für sich allein zentrierend eingesetzt und mit in radialer Richtung wirksamer Sicherung mittels einer Vergußmasse eingebettet bzw. verklebt sind. Die Magnete weisen zu diesem Zweck an den zwei in radialer Richtung einander gegenüberliegenden Grenzflächen unterschiedliche axiale Abmaße auf, die durch eine dazwischenliegende Stufung erzeugt werden, wobei das axiale Abmaß des Magneten in Einbaulage an der in radialer Richtung äußeren Grenzfläche kleiner als das der in radialer Richtung innenliegenden Grenzfläche ist. Auf diese Weise sind die Permanentmagnete seitlich und radial präzise geführt, was eine hohe Rundlaufgenauigkeit und einen exakt definierten Luftspalt ergeben soll. Das Vorsehen dieser Aufnahmeringe erhöht jedoch die Bauteilanzahl und damit gleichzeitig auch den Fertigungs- und Montageaufwand. Die axiale Verbindung zwischen Aufnahmering und dem in axialer Richtung benachbarten Bauelement - beispielsweise Trägerscheibe, Zwischen- und Endring - erfolgt mittels einer Klebverbindung. Die Aufnahmeringe selbst weisen auf der der Einsatzseite der Magneten abgewandten Stirnseite ebenfalls eine Stufung bzw. einen Absatz auf, der eine Fixierung der Aufnahmeringe in radialer Richtung, d.h. in Wirkungsrichtung der Fliehkräfte, bei Verbindung mit komplementär dazu gestalteten Anschlußelementen bedingt. Die Eigenschaften der Klebstoffe und der Vergußmassen bei voneinander abweichenden Randbedingungen sind jedoch sehr unterschiedlich. Im allgemeinen nimmt die Festigkeit des Klebstoffs bei Temperatur- und Feuchtigkeitsschwankungen sowie andauernder Belastung ab und damit gleichzeitig die Festigkeit des Stators. Die Anzahl der Schälstellen ist daher sehr hoch.

Die aus dem deutschen Gebrauchsmuster DE 92 00 116 U1 bekannte Rotorausführung weist Sammler-bzw. Weicheisenelemente auf, die in Axialrichtung mit U-förmigen Aussparungen versehen sind, in welchen die Magnete eingefügt werden. Der Verbund zwischen den Permanentmagneten und den Sammlerelementen erfolgt in Umfangsrichtung durch eine elektrisch nicht leitende Trennschicht. Dies erfolgt beispielsweise durch Verkleben. Eine derartige Ausführung weist zwar eine Fixierung der Lage der Permanentmagneten in Umfangsrichtung auf, jedoch eine Fixierung in radialer Richtung erfolgt lediglich durch die elektrisch nicht leitende Trennschicht. Auch sind bei dieser Ausführung die Nachteile der Ausführung entsprechend dem deutschen Gebrauchsmuster DE 91 16 192 U1 zutreffend.

Zur Realisierung kleiner Rotoranordnungen, bei welchen eine kleine Polteilung gewünscht ist, offenbart die EP 0 642 204 A1 eine Ausführung, bei welcher der Rotor in axialer Richtung eine an der Rotorachse befestigbare Rotorscheibe aufweist, an der die polarisierten Magnete und die magnetisierbaren Sammler- bzw. Weicheisenelemente jeweils in einer konzentrischen Ringanordnung befestigt sind, wobei die Befestigung mit Befestigungselementen erfolgt, die durch die polarisierten Magnete hindurchgehen und an der Rotorscheibe bzw. an einem in axialer Richtung mit der Rotorscheibe verbundenen Isolierringelement befestigt sind.

Ein Nachteil des Einsatzes dieser zusätzlich gegenüber Schälbeanspruchung absichernder Elemente besteht vor allem darin, daß diese eine beträchtliche Vergrößerung der Rotormasse und des Rotorvolumens und damit des verlustbehafteten Aktivvolumens bedingen. Die für die Montage der Sicherungselemente vorzusehenden Bohrungen für Gewindeeinsätze und Schraubendurchgangslöcher erfordern einen hohen Fertigungs- und Bearbeitungsaufwand. Bei Anordnung der Sicherungs- bzw. Befestigungselemente durch die Aktivringe hindurch sind entweder die Magnete in geteilter Form, d.h. in doppelter Anzahl vorzusehen oder bei Durchführung bzw. Anordnung derartiger Elemente im Bereich der Sammler- bzw. Weicheisenelemente diese einem hohen Bearbeitungsaufwand und Montageaufwand ausgesetzt. Bei einem Rotor entsprechend der in der EP 0 642 204 A1 beschriebenen Ausführung sind bei hohen Drehzahlen die auftretenden Fliehkräfte nicht mehr wirtschaftlich durch den Kraft- und Stoffschluß - insbesondere Schrauben und Kleben - zu beherrschen.

Aus der DE 44 90 61 4 C2 offenbarten Ausführung ist ein Rotor bekannt, der neben einer Trägerscheibe wenigstens eine Polstruktur umfaßt, die ebenfalls aus zwei nebeneinanderliegenden, durch eine Zwischenlage aus magnetisch oder elektrisch nicht leitenden Material getrennte Reihen aus in Umfangsrichtung wechselweise magnetisierbaren Magneten mit dazwischenliegenden Sammler-bzw. Weicheisenelementen besteht. Die in einer Polstruktur in den Ringen aus Sammler-bzw. Weicheisenelementen und Magneten angeordneten Magneten weisen in Einbaulage an ihren axialen Begrenzungsflächen wenigstens jeweils eine Zentrierhilfe auf. Diesen Zentrierhilfen sind an den den Magneten zugewandten Stirnseiten von Endring, Zwischenring und/oder Trägerscheibe komplementäre Aussparungen zur Aufnahme zugeordnet. Zusätzlich sind zur Reduzierung der Schälempfindlichkeit des Klebstoffes Verformungszonen an den aus schälfesten Materialien bestehenden Anschlußelementen vorgesehen. Das Vorsehen dieser Zentrierelemente bietet den Vorteil eines radialen Formschlusses zwischen den Magneten und den Anschlußbauelementen bei Fliehkraftwirkung. Die Lage der Magnete wird hiermit durch die Anordnung der Aussparungen genau fixiert und damit gleichzeitig auch die Lage der zwischen den Magneten angeordneten Sammler-bzw. Weicheisenelemente. Das Vorsehen der Verformungszonen bietet den Vorteil, daß eine Abschälung zwischen den Magneten und den Anschlußelementen weitestgehend vermieden wird. Eine derartige Ausführung zeichnet sich zwar durch einen geringeren Bauteilaufwand gegenüber den in den vorgenannten Druckschriften offenbarten Ausführungen auf, dafür ist jedoch der Fertigungs- und Montageaufwand wesentlich höher.

Der Erfindung liegt daher die Aufgabe zugrunde, einen Rotor der eingangs genannten Art derart weiterzuentwickeln, daß die genannten Nachteile vermieden werden und die mechanische Festigkeit erhöht wird, ohne daß die elektromagnetischen Eigenschaften beeinträchtigt werden. Dabei soll sich die Ausführung durch einen geringen Fertigungs- und Montageaufwand auszeichnen und damit kostengünstig sein.

Die erfindungsgemäße Lösung der Aufgabe ist durch die Merkmale des Anspruchs 1 charakterisiert. Vorteilhafte Ausgestaltungen sind in den Unteransprüchen wiedergegeben.

Der Rotor umfaßt wenigstens eine Trägerscheibe und wenigstens eine an einer Stirnseite der Trägerscheibe koaxial zur Achse des Rotors angeordnete und sich in axialer Richtung erstreckende ringförmige Polstruktur. Die Polstruktur umfaßt zwei nebeneinanderliegende, durch eine Zwischenlage aus elektrisch nicht leitendem Material (Zwischenring) getrennte Reihen aus in Umfangsrichtung wechselweise magnetisierten Magnetanordnungen mit dazwischenliegenden Sammler-bzw. Weicheisenelementen. Jeder Polstruktur ist ein Endring zugeordnet.
Die einer Magnetanordnung in Umfangsrichtung benachbarten Sammler-bzw. Weicheisenelemente sind derart gestaltet, daß diese einen ersten innenliegenden Anschlag und einen zweiten außenliegenden Anschlag für die Magnetanordnung in radialer Richtung bilden. Erfindungsgemäß wird ein Formschluß der einzelnen Magneten und Sammler-bzw. Weicheisenelemente in radialer Richtung dadurch hergestellt, daß in bestimmten Abständen in Umfangsrichtung den Reihen aus in Umfangsrichtung wechselweise magnetisierten Magnetanordnungen mit dazwischenliegenden Sammler-bzw. Weicheisenelementen in axialer Richtung beidseitig überstehende Elemente zugeordnet sind, wobei wenigstens ein Teil der überstehenden Bereiche von dazu komplementären Nuten an den diesen Reihen benachbarten Elementen aufnehmbar sind.

Vorzugsweise sind die überstehenden Elemente im Bereich der Magnetanordnungen vorgesehen. Zwischen den in axialer Richtung einer Reihe aus in Umfangsrichtung wechselweise magnetisierten Magnetanordnungen mit dazwischenliegenden Sammler-bzw. Weicheisenelementen benachbarten Ringen bzw. Elementen, insbesondere zwischen der zentralen Trägerscheibe und dem Zwischenring bzw. dem Zwischenring und dem Endring ist zu diesem Zweck wenigstens ein mit amagnetischen Eigenschaften ausgestattetes Zwischenelement vorgesehen, welches in dazu komplementäre Nuten an den der Reihe aus in Umfangsrichtung wechselweise magnetisierten Magnetanordnungen mit dazwischenliegenden Sammler-bzw. Weicheisenelementen benachbarten Elementen einsetzbar ist. Bei den aus Magnetanordnungen und Sammler- bzw. Weicheisenelementen bestehenden Ringen sind die zwischen zwei Sammler-bzw. Weicheisenelementen in Umfangsrichtung angeordneten Magnetanordnungen dazu zweiteilig ausgeführt bzw. umfassen einen Innen- und einen Außenmagneten. Der Formschluß wird mittels den Zwischenelementen realisiert, die zwischen den Innen- und Außenmagneten in den aus Magnetanordnungen und Sammler-bzw. Weicheisenelementen bestehenden Ringen angeordnet sind, und sich über die Ausdehnung der Magnetanordnungen in axialer Richtung erstrecken und denen komplementäre Nuten an den aus nicht leitendem Material bestehenden Elementen der Polkörperstruktur, d.h. an der zentralen Trägerscheibe, dem Zwischen- bzw. dem Endring zugeordnet sind.

Die erfindungsgemäße Gestaltung erlaubt mittels eines Zusatzelementes in den Reihen aus in Umfangsrichtung wechselweise angeordnten Magnetanordnungen und Sammler- bzw. Weicheisenelementen eine ausreichende Fixierung der einzelnen Elemente der Polstruktur zueinander in radialer Richtung durch die Überlagerung des Formschlusses zwischen einer Magnetanordnung und den dieser in Umfangsrichtung benachbarten Sammler- bzw. Weicheisenelemente sowie des Formschlusses zwischen den in axialer Richtung den Reihen aus Magnetanordnungen und Sammler- bzw. Weicheisenelementen benachbarten Elementen. Diese Überlagerung ermöglicht die Schaffung einer in radialer Richtung stabilen Polstruktur mit einfachen konstruktiven Mitteln.

Vorzugsweise ist in Umfangsrichtung betrachtet jeder Magnetanordnung ein Zwischenelement zugeordnet.

Das Zwischenelement ist aus amagnetischem Material hergestellt, und weist beispielsweise die Form einer Platte auf. In Umfangsrichtung erstreckt sich das überstehende Element, insbesondere das Zwischenelement über wenigstens einen Teil der Ausdehnung der Magnetanordnung, vorzugsweise jedoch über die gesamte Ausdehnung von Innen- und Außenmagneten.

Es ist jedoch auch denkbar, das Zwischenelement zylindrisch zu gestalten. Die Aufnahme erfolgt dann in dazu komplementären Bohrungen. Im Bereich einer Magnetanordnung kann dann wenigstens ein derartiges Zwischenelement angeordnet werden.

Zusätzlich können gleichmäßig verteilt auf einem bestimmten Durchmesser, vorzugsweise innerhalb des Durchmessers, auf welchem die Verbindungselemente angeordnet sind, Schraubverbindungen vorgesehen werden, die eine Verspannung in axialer Richtung zwischen den einzelnen Elementen der Polstruktur, insbesondere dem Endring, dem Zwischenring und der zentralen Trägerscheibe und den dazwischen angeordneten Ringen mit wechselweise angeordneten Magneten und Sammler-bzw. Weicheisenelementen, realisiert werden.

Die Realisierung des Formschlusses erfolgt lediglich durch Einstecken der formschlüssigen Verbindungselemente in die zueinander komplementären Nuten. Da es sich bei diesen Elementen vorzugsweise um Kunststoffteile handelt, welche durch bestimmte Gießtechniken gefertigt werden, sind diese Nuten sehr einfach herstellbar und erfordern wenig zusätzlichen Bearbeitungsaufwand. Es werden auch keine erhöhten Anforderungen an die Fertigungsgenauigkeit gestellt, da selbst bei Paßungenauigkeiten, d.h. bei Relativbewegung zwischen dem Zwischenelementen und den dazu komplementären Nuten eine Kraftübertragung möglich ist, aufgrund des Einflusses der Fliehkraft. Aufgrund der Teilnahme der Zwischenelemente an der Kraftübertragung sind wesentlich weniger Schraubverbindungen gegenüber dem gattungsgemäßen Stand der Technik erforderlich..

Die erfindungsgemäße Lösung der Aufgabe wird nachfolgend anhand von Figuren erläutert. Es zeigen:
Fig. 1 einen Ausschnitt aus einem Axialschnitt durch einen Rotor;
Fig. 2 eine Ansicht I-I entsprechend der Figur 1.

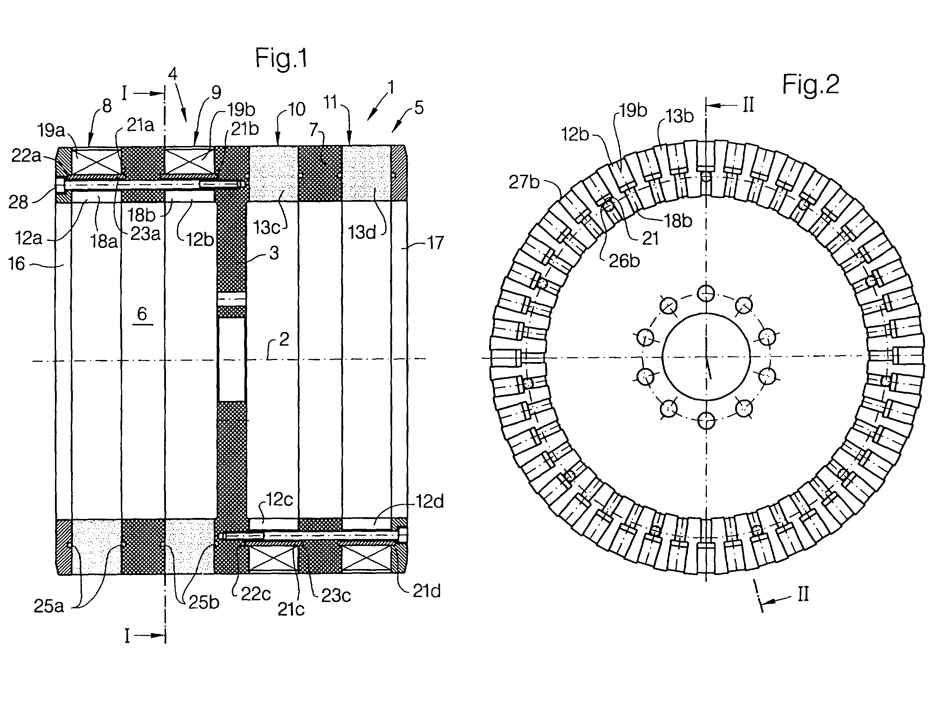

Die Figur 1 zeigt einen Ausschnitt aus einem Axialschnitt durch einen Rotor 1. Der Rotor 1 umfaßt eine Rotorwelle 2, wobei die Rotorwelle hier im einzelnen nicht dargestellt ist, sondern lediglich die Rotorachse, die in einem hier nicht dargestellten Statorgehäuse gelagert ist, mit einer darauf drehfest angeordneten und sich im wesentlichen radial erstreckenden kreisrunden zentralen Trägerscheibe 3, an deren Stirnseiten jeweils eine zur Rotorachse 2 koaxiale ringförmige Polstruktur 4 bzw. 5 angeordnet sind. Jede Polstruktur 4 bzw. 5 umfaßt jeweils zwei nebeneinanderliegende, durch eine Zwischenlage 6 bzw. 7 aus magnetisch und elektrisch nicht leitendem Material getrennte Reihen 8, 9 bzw. 10, 11 aus in Umfangsrichtung wechselweise magnetisierten Permanentmagnetanordnungen 12, hier 12a für die Reihe 8, 12b für die Reihe 9, und nicht dargestellt 12c und 12d für die Reihen 10 bzw. Reihen 11, und dazwischenliegenden, hier nur ausschnittsweise dargestellten Sammler-bzw. Weicheisenelementen 13. Hier sind stellvertretend die Sammler-bzw. Weicheisenelemente 13c für die Reihe 10 und 13d für die Reihe 11 dargestellt. Stirnseitig ist jeder Polstruktur 4 bzw. 5 jeweils ein Endring 16 bzw. 17 zugeordnet. Jede Magnetanordnung umfaßt im wesentlichen zwei Magnete - einen Innenmagnet 18 und einen Außenmagneten 19, hier stellvertretend 18a und 19a bzw. 18b und 19b dargestellt.

Der Innenmagnet 18 ist dabei in radialer Richtung auf einem kleineren Durchmesser bezogen auf die Rotorachse 2 angeordnet wie der Außenmagnet 19 einer jeden Magnetanordnung 12. Die Fixierung der Magnete in Umfangsrichtung erfolgt dabei hauptsächlich durch Formschluß mit den den Magneten in Umfangsrichtung benachbarten Sammler-bzw. Weicheisenelementen. Dies ist in der Figur 2 dargestellt. Die Figur 2 zeigt einen Schnitt I-I gemäß der Figur 1 in Form einer Ansicht auf den Ring 9 in axialer Richtung.

Erfindungsgemäß ist jeder Magnetanordnung 12 ein formschlüssiges Verbindungselement 21 zugeordnet. Dieses ist in jeder Magnetanordnung 12 zwischen dem Innen- und dem Außenmagneten 18 bzw. 19 angeordnet. Das formschlüssige Verbindungselement 21 ist vorzugsweise als eine aus amagnetischem Blech gestanzte Platte ausgeführt. Diese erstreckt sich in axialer Richtung vorzugsweise über die axiale Erstreckung der Magnetanordnung 12 hinaus. Den so gebildeten Überhängen 22 bzw. 23 sind im wesentlichen dazu komplementäre Nuten 24 bzw. 25 in den den Ringen 8 bzw. 9 bzw. 10 bzw. 11 benachbarten Elementen zugeordnet. In Umfangsrichtung erstrecken sich die formschlüssigen Verbindungselemente 21 jeweils im wesentlichen über die in Umfangsrichtung erfolgende Ausdehnung der Permanentmagneten, eine geringere Ausdehnung ist ebenfalls denkbar. Die Verbindungselemente einer jeden Magnetanordnung werden zwischen dem Innen- und dem Außenmagneten 18 bzw. 19 in die dazu komplementären Nuten 24 und 25 an den benachbarten Elementen, beispielsweise für die Magnetanordnung 12a, den Nuten 24a im Endring 16 und 25 im Zwischenring 6 eingesteckt. Unter dem Einfluß der Fliehkraft wird dadurch ein Formschluß zwischen den einzelnen Sammlerelementen und der Magneten in radialer Richtung hergestellt, da das formschlüssige Verbindungselement die Lage der Magnetanordnung in radialer Richtung fixiert und zusätzlich die Magnetanordnungen mit den Sammler- bzw. Weicheisenelementen in Umfangsrichtung eine formschlüssige Verbindung aufweisen bzw. in ihrem Verschiebeweg in radialer Richtung begrenzt werden..

In der Figur 2 ist eine Ansicht I-I entsprechend der Fig. 1 auf den Ring 9 dargestellt. Daraus wird ersichtlich, daß die Sammler-bzw. Weicheisenelemente 13b des Ringes 9 die Innen- und Außenmagnete 18b bzw. 19b der Magnetanordnung 12b in radialer Richtung fixieren. Die Sammler-bzw. Weicheisenelemente 13b bilden dabei einen ersten in radialer Richtung innenliegenden Anschlag 26 für den Innenmagneten 18b sowie ein in radialer Richtung außenliegenden Anschlag 27 für den Außenmagneten 19b. Durch das zusätzliche Vorsehen des formschlüssigen Verbindungselementes 21 wird im Zusammenwirken mit den aus nicht leitendem Material bestehenden Elementen wie Zwischenring und Endring sowie Zwischenring und axialer Trägerscheibe ein Formschluß in radialer Richtung hergestellt.

Erfindungswesentlich ist, daß durch eine Überlagerung einer radialen Fixierung in radialer Richtung zwischen den einander benachbarten Magnetanordnungen und Sammler-bzw. Weicheisenelementen und einer formschlüssigen Verbindung zwischen den diesem Ring benachbarten Elementen in radialer Richtung ein Formschluß der einzelnen Magnetanordnungen und Sammler-bzw. Weicheisenelemente einer Ringanordnung in radialer Richtung hergestellt wird, wobei eine hohe Festigkeit der Rotorstruktur erzielt wird. Zum Verspannen zwischen den einzelnen Elementen in axialer Richtung sind eine geringe Anzahl von Schraubverbindungen gegenüber dem Stand der Technik, welche hier mit 28 bezeichnet sind, vorgesehen. Diese sind vorzugsweise auf einem Durchmesser DS angeordnet, welcher kleiner ist als der Durchmesser, auf welchem die formschlüssigen Verbindungselemente 21 angeordnet werden.

## Patentansprüche

1. Rotor für eine elektrische Maschine, insbesondere Transversalflußmaschine, mit den folgenden Merkmalen:
1.1 mit wenigstens einer Trägerscheibe (3);
1.2 mit wenigstens einer an einer Stirnseite der Trägerscheibe (3) koaxial zur Achse (2) des Rotors (1) angeordneten und sich in axialer Richtung erstreckenden ringförmigen Polstruktur (4,5);
1.3 die Polstruktur (4,5) umfaßt zwei nebeneinanderliegende, durch eine Zwischenlage (6,7) aus magnetisch und elektrisch nicht leitendem Material (Zwischenring) getrennte Reihen (8-11) aus in Umfangsrichtung wechselweise magnetisierten Magnetanordnungen (12) mit dazwischenliegenden Sammler-bzw. Weicheisenelementen (13);
1.4 jeder Polstruktur (4,5) ist ein Endring (16,17) zugeordnet;
1.5 die einer Magnetanordnung (12) in Umfangsrichtung benachbarten Sammler-bzw. Weicheisenelemente (13) sind derart gestaltet, daß diese einen ersten innenliegenden Anschlag (26) und einen zweiten außenliegenden Anschlag (27) für die Magnetanordnung in radialer Richtung bilden;
gekennzeichnet durch die folgenden Merkmale:
1.6 den Reihen (8-11) aus in Umfangsrichtung wechselweise magnetisierten Magnetanordnungen (12) mit dazwischenliegenden Sammler-bzw. Weicheisenelementen (13) sind in Umfangsrichtung in bestimmten Abständen in axialer Richtung beidseitig überstehende Elemente (21) zugeordnet;
1.7 die überstehenden Elemente (21) sind in dazu komplementäre Nuten (24,25) an den den getrennten Reihen (8-11) aus in Umfangsrichtung wechselweise magnetisierten Magnetanordnungen (12) mit dazwischenliegenden Sammler-bzw. Weicheisenelementen (13) benachbarten Ringen (8-11) - Endring (16,17), Zwischenring (6,7) und zentrale Trägerscheibe (3) - einsteckbar.

2. Rotor nach Anspruch 1, gekennzeichnet durch folgende Merkmale:
2.1 die überstehenden Elemente (21) sind einer Vielzahl von Magnetanordnungen (12) zugeordnet;
2.2 eine Vielzahl der Magnetanordnungen weist einen Innen- (18) und einen Außenmagneten (19) auf;
2.3 das überstehende Element (21) ist als Zwischenelement aus amagnetischen Material ausgeführt
2.4 das Zwischenelement (21) ist zwischen dem Innen- (18) und dem Außenmagneten (19) in radialer Richtung angeordnet und erstreckt sich in axialer Richtung über deren Ausdehnung hinaus.

3. Rotor nach Anspruch 2, dadurch gekennzeichnet, daß jeder Magnetanordnung (12) ein Zwischenelement (21) zugeordnet ist.

4. Rotor nach einem der Ansprüche 1 bis 3, dadurch gekennzeichnet, daß in Umfangsrichtung auf einem bestimmten Durchmesser zusätzlich zur axialen Verspannung der Polstruktur (4,5) mit der Trägerscheibe (3) Schraubverbindungen (28) vorgesehen sind.

5. Rotor nach Anspruch 4, dadurch gekennzeichnet, daß die Schraubverbindungen (28) auf einem Durchmesser angeordnet sind, der innerhalb der radialen Erstreckung der Innenmagnete (18) der Magnetanordnungen befindet, wobei die Magnetanordnungen (12), in deren Bereich die Schraubverbindungen (28) vorgesehen sind, frei von Innenmagneten (18) ausgeführt sind.

6. Rotor nach einem der Ansprüche 1 bis 5, dadurch gekennzeichnet, daß die Sammler-bzw. Weicheisenelemente (13) mit den Magnetanordnungen und/oder die Magnetanordnungen (12) mit den benachbarten Ringen (8-11) - Zwischenring (6,7), Endring (16,17) bzw. zentrale Trägerscheibe (3) - zusätzlich formschlüssig verbunden sind.

7. Rotor nach einem der Ansprüche 2 bis 6, dadurch gekennzeichnet, daß das Zwischenelement (21) sich über wenigstens einen Teil der Erstreckung der Magnetanordnung (12) in Umfangsrichtung erstreckt.

8. Rotor nach einem der Ansprüche 2 bis 7, dadurch gekennzeichnet, daß das Zwischenelement (21) als Platte ausgeführt ist.

## Claims

1. Rotor for an electrical machine, in particular a transverse flux machine, having the following features:
1.1 having at least one carrier disk (3);
1.2 having at least one annular pole structure (4, 5) disposed on one end face of the carrier disk (3) coaxially with the axis (2) of the rotor (1) and extending in axial direction;
1.3 the pole structure (4, 5) comprises two juxtaposed rows (8-11), separated by an intermediate layer of non-permeable and electrically non-conductive material (intermediate ring), of, in peripheral direction, alternately magnetised magnet arrangements (12) with interposed collector and/or soft-iron elements (13);
1.4 an end ring (16, 17) is associated with each pole structure (4, 5);
1.5 the collector and/or soft-iron elements (13) peripherally adjacent to a magnet arrangement (12) are designed so as to form a first inner-lying stop (26) and a second outer-lying stop (27) for the magnet arrangement in radial direction;
characterised by the following features:
1.6 associated with the rows (8-11) of, in peripheral direction, alternately magnetised magnet arrangements (12) with interposed collector and/or soft-iron elements (13) there are in peripheral direction at specific intervals elements (21) projecting axially on both sides;
1.7 the projecting elements (21) are insertable into complementary grooves (24, 25) of the rings (8-11) - end ring (16, 17), intermediate ring (6, 7) and central carrier disk (3) - which are adjacent to the separate rows (8-11) of, in peripheral direction, alternately magnetised magnet arrangements (12) with interposed collector and/or soft-iron elements (13).

2. Rotor according to claim 1, characterised by the following features:
2.1 the projecting elements (21) are associated with a plurality of magnet arrangements (12);
2.2 a plurality of the magnet arrangements comprises an inner (18) and an outer magnet (19);
2.3 the projecting element (21) takes the form of an intermediate element made of non-magnetic material;
2.4 the intermediate element (21) is disposed radially between the inner (18) and the outer magnet (19) and extends axially beyond the extension of said magnets.

3. Rotor according to claim 2, characterised in that an intermediate element (21) is associated with each magnet arrangement (12).

4. Rotor according to one of claims 1 to 3, characterised in that screw-connections (28) are additionally provided in peripheral direction on a specific diameter for axially bracing the pole structure (4, 5) with the carrier disk (3).

5. Rotor according to claim 4, characterised in that the screw-connections (28) are disposed on a diameter which is situated inside the radial extension of the inner magnets (18) of the magnet arrangements, wherein the magnet arrangements (12), in the region of which the screw-connections (28) are provided, are designed to be free of inner magnets (18).

6. Rotor according to one of claims 1 to 5, characterised in that the collector and/or soft-iron elements (13) are additionally connected in a keyed manner to the magnet arrangements and/or the magnet arrangements (12) are additionally connected in a keyed manner to the adjacent rings (8-11) - intermediate ring (6, 7), end ring (16, 17) and/or central carrier disk (3).

7. Rotor according to one of claims 2 to 6, characterised in that the intermediate element (21) in peripheral direction extends over at least part of the extension of the magnet arrangement (12).

8. Rotor according to one of claims 2 to 7, characterised in that the intermediate element (21) takes the form of a plate.

## Revendications

1. Rotor pour une machine électrique, en particulier une machine à flux transversal, présentant les caractéristiques suivantes :
1.1 avec au moins un disque porteur **(3)** ;
1.2 avec au moins une structure polaire **(4, 5)** de forme annulaire placée contre une face frontale du disque porteur **(3)** de manière coaxiale à l'axe **(2)** du rotor **(1)** et s'étendant dans la direction axiale ;
1.3 la structure polaire **(4, 5)** comprend deux rangées séparées **(8-11)** juxtaposées, séparées par une couche intermédiaire **(6, 7)** (bagues intermédiaires) en matériau non conducteur magnétique et électrique, de systèmes magnétiques **(12)** magnétisés de manière alternée dans la direction circonférentielle, avec des éléments collecteurs **(13)** ou en fer doux interposés entre eux ;
1.4 à chaque structure polaire **(4, 5)** est associe une bague d'extrémité **(16, 17)** ;
1.5 les éléments collecteurs **(13)** ou en fer doux voisins d'un système magnétique **(12)** dans la direction circonférentielle sont conçus en sorte que ceux-ci forment dans la direction radiale une première butée intérieure **(26)** et une deuxième butée extérieure **(27)** pour le système magnétique ;
caractérisé en ce que :
1.6 aux rangées **(8-11)** de systèmes magnétiques **(12)** magnétisés de manière alternée dans la direction circonférentielle, avec des éléments collecteurs **(13)** ou en fer doux interposés entre eux, sont associés dans la direction circonférentielle des éléments **(21)**, en saillie des deux côtés, à certaines distances dans la direction axiale ;
1.7 les éléments en saillie **(21)** peuvent être enfoncés dans des rainures **(24,25)** complémentaires d'eux dans les bagues - bague d'extrémité **(16, 17)**, bague intermédiaire **(6, 7)** et disque porteur central **(3)** - voisines des rangées séparées **(8-11)** de systèmes magnétiques **(12)** magnétisés de manière alternée dans la direction circonférentielle, avec des éléments collecteurs **(13)** ou en fer doux interposés entre eux.

2. Rotor selon la revendication 1, caractérisé en ce que :
2.1 les éléments en saillie **(21)** sont associés à une pluralité de systèmes magnétiques **(12)** ;
2.2 une pluralité de systèmes magnétiques présente un aimant intérieur **(18)** et un aimant extérieur **(19)** ;
2.3 l'élément en saillie **(21)** est conformé en élément intermédiaire en matériau amagnétique ;
2.4 l'élément intermédiaire **(21)** est placé dans la direction radiale entre les aimants intérieur **(18)** et extérieur **(19)** et s'étend dans la direction axiale au-delà de leur extension axiale.

3. Rotor selon la revendication 2, caractérisé en ce qu'à chaque système magnétique **(12)** est associé un élément intermédiaire **(21)**.

4. Rotor selon l'une des revendications 1 à 3, caractérisé en ce que, dans la direction circonférentielle, sur un diamètre déterminé, en plus de la fixation axiale de la structure polaire **(4, 5)** au disque porteur **(3)**, des vissages **(28)** sont prévus.

5. Rotor selon la revendication 4, caractérisé en ce que les vissages **(28)** sont placés sur un diamètre qui se trouve à l'intérieur de l'extension radiale des aimants intérieurs **(18)** des systèmes magnétiques, les systèmes magnétiques **(12)** au niveau desquels sont prévus les vissages **(28)** étant dépourvus d'aimants intérieurs **(18)**.

6. Rotor selon l'une des revendications 1 à 5, caractérisé en ce que les éléments collecteurs **(13)** ou en fer doux sont reliés de plus par engagement positif aux systèmes magnétiques et/ou aux systèmes magnétiques **(12)** avec les bagues voisines **(8-11)** - bague intermédiaire **(6, 7)** bague d'extrémité **(16, 17)**, disque porteur central **(3)** -.

7. Rotor selon l'une des revendications 2 à 6, caractérisé en ce que l'élément intermédiaire **(21)** s'étend sur au moins une partie de l'extension du système magnétique **(12)** dans la direction circonférentielle.

8. Rotor selon l'une des revendications 2 à 7, caractérisé en ce que l'élément intermédiaire **(21)** est conformé en plaque.
